# EUROPÄISCHE PATENTSCHRIFT

(11) **EP 1 041 137 B1**
(45) Veröffentlichungstag und Bekanntmachung des Hinweises auf die Patenterteilung: **07.09.2005**
(21) Anmeldenummer: 00105595.3
(22) Anmeldetag: 16.03.2000
(51) Int. Cl.: C11B 9/00, A23L 1/226

(54) **Sensorisch aktive Substanz**
Organoleptic compound
Composé organoleptique

(30) Priorität: 29.03.1999 DE 19914310
(43) Veröffentlichungstag der Anmeldung: 04.10.2000
(73) Patentinhaber: Symrise GmbH & Co. KG, 37603 Holzminden (DE)
(72) Erfinder: Schmaus, Gerhard, Dr., 37671 Höxter-Bosseborn (DE); Meier, Manfred, 37699 Fürstenberg (DE); Seggewiss, Berthold, 8606 Greifensee (CH)
(74) Vertreter: Eisenführ, Speiser & Partner

(56) Entgegenhaltungen:
- US-A- 3 653 920
- US-A- 3 883 668

## Beschreibung

Die Erfindung betrifft die Verwendung des bekannten Stoffs 2,4,6-Trithiaheptan der Formel I als sensorisch aktive Substanz (Riechstoff und/oder Aromastoff).

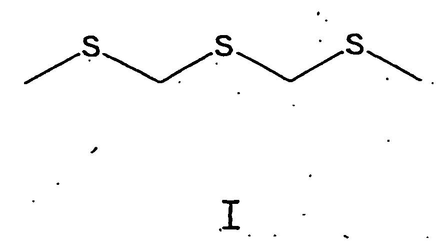

Die Erfindung betrifft ferner Riech- und/oder Aromastoffkompositionen, die durch einen Gehalt an 2,4,6-Trithiaheptan gekennzeichnet sind, sowie Verfahren zu deren Herstellung.

2,4,6-Trithiaheptan (CAS-Nr. 6540-86-9) kann in der dem Fachmann bekannten Weise hergestellt werden. Herstellungsverfahren sind beispielsweise in F. Fehér und K. Vogelbruch; Chem. Ber. 91, 996-1005 (1958) sowie in J.S. Grossert, D.L. Hooper and W.M. Neaves; Can.J.Chem 59, 326-332 (1981) beschrieben.

US 3 883 668 A (Sloot Dirk) offenbart die Verbindung 2,4-Dithiapentan als Geschmacksstoff. Ein Hinweis auf 2,4,6-Trithiaheptan findet sich in der US 3 883 668 A jedoch nicht.

In der Duft- und Aromastoffindustrie besteht ein beständiger Bedarf an synthetischen Riech- und Aromastoffen (Geschmackstoffen), die sich günstig und mit gleichbleibender Qualität herstellen lassen, bei längerer Lagerung möglichst auch im Kontakt mit anderen Stoffen stabil bleiben und erwünschte olfaktorische bzw. geschmackliche Eigenschaften haben. Riechstoffe sollen angenehme, möglichst naturnahe Duftnoten von ausreichender Intensität aufweisen und in der Lage sein, den Duft von kosmetischen oder technischen Konsumgütern vorteilhaft zu beeinflussen. Aromastoffe sollen gut verträglich sein, an typische Geschmackskomponenten beliebter Speisen erinnern oder sogar mit diesen identisch sein und dazu beitragen können, den Geschmack von Lebensmitteln, oral zu verabreichenden Medikamenten und dergleichen positiv zu beeinflussen. Das Auffinden von Riech- und Aromastoffen, die diesen Anforderungen entsprechen, hat sich als verhältnismäßig aufwendig erwiesen und erfordert regelmäßig umfangreiche Untersuchungen, insbesondere wenn interessante neuartige Duftnoten oder Geschmacksrichtungen angestrebt werden.

Die Suche nach geeigneten Riech- oder Aromastoffen wird für den Fachmann insbesondere durch folgende Sachverhalte erschwert:
- Die Mechanismen der Duft- bzw. Aromaentwicklung sind nicht bekannt.
- Eine quantitative Charakterisierung eines Duftes oder Aromas ist nicht möglich.
- Die Zusammenhänge zwischen der Duft- und/oder Aromaentwicklung einerseits und der chemischen Struktur des sensorisch aktiven Riech- und/oder Aromastoffs andererseits sind nicht hinreichend erforscht.
- Häufig bewirken bereits geringfügige Änderungen am strukturellen Aufbau bekannter Riech- oder Aromastoffe starke Änderungen der olfaktorischen bzw. geschmacklichen Eigenschaften und beeinträchtigen die Verträglichkeit für den menschlichen Organismus.

Der Erfolg der Suche nach geeigneten sensorisch aktiven Stoffen, das heißt nach geeigneten Riech- oder Aromastoffen hängt deshalb häufig von der Intuition des Suchenden ab.

Die bekannte Substanz 2,4,6-Trithiaheptan wird in der grundlegenden Arbeit von Franz Fehér und Kurt Vogelbruch als ein farbloses Öl von geringem Geruch bezeichnet. In der späteren Arbeit von J. Stuart Grossert, Donald L. Hooper und William M. Neaves wird darauf hingewiesen, daß von ihnen synthetisiertes 2,4,6-Trithiaheptan dem Geruch nach identisch mit dem Material ist, das man nach dem Verfahren von Fehér und Vogelbruch erhält.

Es hat sich aber jetzt überraschenderweise herausgestellt, daß die von Fehér und Vogelbruch getroffene Aussage, daß es sich bei 2,4,6-Trithiaheptan um eine Verbindung von geringem Geruch handelt, falsch ist.

Eigene Untersuchungen haben vielmehr ergeben, daß 2,4,6-Trithiaheptan geruchlich und geschmacklich äußerst interessant ist, wobei sich die sensorischen Eigenschaften des 2,4,6-Trithiaheptans wie folgt beschreiben lassen.

### Sensorische Eigenschaften:

- Geruch:: Lauch, Zwiebel, Kresse, Meerrettich; pilzig, erdig, grünstechend.
- Geschmack:: Zwiebel, Lauch, Kresse, Rettich, Meerrettich; pilzig, scharf.

2,4,6-Trithiaheptan kann mit den für Duft- und Geschmackstoffkompositionen üblicherweise verwendeten Bestandteilen vermischt bzw. solchen Kompositionen zugesetzt werden. Das Ziel ist dabei immer die Einstellung eines an den gewünschten olfaktorischen oder geschmacklichen Effekt angepaßten Gewichtsanteils (oder entsprechend: einer angepaßten Konzentration) des 2,4,6-Trithiaheptan innerhalb der Gesamtkomposition. Günstige Gewichtsanteile (= Massengehalte) des 2,4,6-Trithiaheptan liegen bei Riech- und/oder Geschmackstoffkompositionen häufig im Bereich zwischen 10⁻⁷ und 10⁻², vorzugsweise im Bereich zwischen 10⁻⁶ und 10⁻³.

Nachfolgend wird die Erfindung anhand einiger ausgewählter Beispiele näher erläutert.

Ausgehend von typischen Grundkompositionen wird dabei der Effekt beschrieben, den der Zusatz bzw. die Beimischung des erfindungsgemäßen 2,4,6-Trithiaheptan mit sich bringt. Die beschriebenen olfaktorischen und geschmacklichen Effekte stellen sich in ähnlicher Weise auch bei anderen typischen Grundkompositionen ein.

Die in den Beispielen genannten Mengen sind jeweils "Gewichtsanteile".

### Beispiel 1:

| Champignonaroma (Typ frische Champignons): | A | B |
|---|---|---|
| Neutralöl | 940,20 | 940,20 |
| 1-Octen-3-ol | 50,00 | 50,00 |
| iso-Amylalkohol | 1,00 | 1,00 |
| Hexanol | 2,00 | 2,00 |
| Phenylethylalkohol | 0,50 | 0,50 |
| 3-Octanon | 0,60 | 0,60 |
| 2-Octenal | 0,20 | 0,20 |
| Capronsäure | 3,00 | 3,00 |
| 1-Octen-3-yl-formiat | 1,00 | 1,00 |
| Linalool | 1,50 | 1,50 |
| 2,4,6-Trithiaheptan 1% in Triacetin | - | 0,30 |
| | 999,70 | 1000,00 |

Das Aroma der Geschmackstoff-Mischung A wird durch den Zusatz von 2,4,6-Trithiaheptan (Spalte B; 0,30 Gewichtsanteile einer 1%igen Lösung in Triacetin) intensiver, natürlicher, gemüse-artiger und typischer Champignon-artig.

### Beispiel 2:

| Laucharoma: | A | B |
|---|---|---|
| Neutralöl | 997,60 | 997,60 |
| Dipropyldisulfid | 0,40 | 0,40 |
| Dipropyltrisulfid | 0,60 | 0,60 |
| Dimethylsulfid | 0,50 | 0,50 |
| Zwiebel-Öl | 0,50 | 0,50 |
| Asa foetida-Öl | 0,20 | 0,20 |
| Furaneol (10% in Triacetin) | 0,10 | 0,10 |
| 2,4,6-Trithiaheptan, 1% in Triacetin | - | 0,10 |
| | 999,90 | 1000,00 |

Das Aroma der Geschmackstoff-Mischung A wird durch den Zusatz von 2,4,6-Trithiaheptan (Spalte B; 0,10 Gewichtsanteile einer 1%igen Lösung in Triacetin) intensiver. Das sensorische Profil von B ist gegenüber A deutlich verändert und zeichnet sich durch einen natürlicheren, frischergrünen und typischer lauch-artigen Charakter aus.

### Beispiel 3:

| Galbanum-Base (Riechstoff): | A | B |
|---|---|---|
| β-Pinen | 510 | 510 |
| α-Pinen | 110 | 110 |
| Limonen | 50 | 50 |
| 3-Caren | 80 | 80 |
| Myrcen | 40 | 40 |
| Camphen | 30 | 30 |
| β-Caryophyllen | 20 | 20 |
| 1,3,5-Undecatrien | 20 | 20 |
| α-Terpineol | 20 | 20 |
| α-Terpinylacetat | 20 | 20 |
| Thymolmethylether | 20 | 20 |
| 2-Isobutyl-3-methoxypyrazin (1% in Propylenglykol) | 20 | 20 |
| sec-Butyl-3methylbut-2-en-thioat | 20 | 20 |
| Linalool | 10 | 10 |
| 2,4,6-Trithiaheptan (1% in Propylenglykol) | - | 30 |
| | 970 | 1000 |

Der Duft der Riechstoff-Mischung A wird durch den Zusatz von 2,4,6-Trithiaheptan (Spalte B; 30 Gewichtsanteile einer 1%igen Lösung in Propylenglycol) intensiver und typischer Galbanumöl-artig. Die Kopfnote der Base B riecht im Vergleich zu A natürlicher und stärker grün-schweflig.

## Patentansprüche

1. Verwendung von 2,4,6-Trithiaheptan als sensorisch aktive Substanz (Riechstoff und/oder Aromastoff).

2. Riech- und/oder Aromastoffkomposition, welche übliche Bestandteile einer Riech- und/oder Aromastoffkomposition enthält, **dadurch gekennzeichnet, dass** sie einen Gehalt an 2,4,6-Trithiaheptan aufweist.

3. Riech- und/oder Aromastoffkomposition nach Anspruch 2, **dadurch gekennzeichnet, daß** der Gewichtsanteil von 2,4,6-Trithiaheptan im Bereich zwischen 10⁻⁷ und 10⁻² liegt, vorzugsweise im Bereich zwischen 10⁻⁶ und 10⁻³.

4. Verfahren zur Herstellung einer Riech- und/oder Aromastoffkomposition, **dadurch gekennzeichnet, daß** 2,4,6-Trithiaheptan mit üblichen Bestandteilen einer Riech- und/oder Aromastoffkomposition vermischt oder diesen zugesetzt wird.

## Claims

1. Use of 2,4,6-trithiaheptane as an organoleptic substance (fragrance and/or aroma substance).

2. A fragrance and/or aroma substance composition which contains conventional constituents of a fragrance and/or aroma substance composition, **characterised in that** it comprises a content of 2,4,6-trithiaheptane.

3. A fragrance and/or aroma substance composition according to claim 2, **characterised in that** the proportion by weight of 2,4,6-trithiaheptane is in the range between 10⁻⁷ and 10⁻², preferably in the range between 10⁻⁶ and 10⁻³.

4. A process for the production of a fragrance and/or aroma substance composition, **characterised in that** 2,4,6-trithiaheptane is mixed with or added to conventional constituents of a fragrance and/or aroma substance composition.

## Revendications

1. Utilisation du 2,4,6-trithiaheptane en tant que substance à activité sensorielle (matière odorante et/ou arôme).

2. Composition de parfum et/ou d'arôme contenant des constituants usuels pour une composition de parfum et/ou d'arôme, et **caractérisée en ce qu'**elle contient du 2,4,6-trithiaheptane.

3. Composition de parfum et/ou d'arôme selon revendication 2 **caractérisée en ce que** la proportion en poids du 2,4,6-trithiaheptane se situe dans l'intervalle de 10⁻⁷ à 10⁻², de préférence dans l'intervalle de 10⁻⁶ à 10⁻³.

4. Procédé pour la préparation d'une composition de parfum et/ou d'arôme, **caractérisé en ce que** l'on ajoute ou l'on mélange du 2,4,6-trithiaheptane à des constituants usuels d'une composition de parfum et/ou d'arôme.
